# EUROPEAN PATENT SPECIFICATION

(11) **EP 1 542 396 B1**
(45) Date of publication and mention of the grant of the patent: **30.05.2007**
(21) Application number: 04106005.4
(22) Date of filing: 23.11.2004
(51) Int. Cl.: H04L 12/22, G06F 21/00

(54) **Secure data transmission in a network system of image processing devices**
Sichere Datenübertragung in einem vernetzten System der Bildverarbeitungsvorrichtungen
Transmission sécurisée de données dans un système de réseau de dispositifs de traitement d'images

(30) Priority: 27.11.2003 EP 03078762
(43) Date of publication of application: 15.06.2005
(73) Proprietor: Océ-Technologies B.V., 5914 CC Venlo (NL)
(72) Inventor: Van den Tillaart, Robertus C.W.T.M., 5422 BJ Gemert (NL)
(74) Representative: van Meeteren, Arend Anthonie

(56) References cited:
- EP-A- 1 045 574
- EP-A- 1 091 285
- US-A1- 2002 078 351
- US-A1- 2002 184 494
- US-A1- 2003 204 747

## Description

The invention relates to a method of secure transmission of digital data relating to a document between any of a scanner, a printer and a host computer such as a user workstation, interconnected by a digital network.

In particular, the invention relates to a method comprising the following steps:
at a sending station:
   - generating a document file through a data source;
   - inputting a session-specific user-defined character string by an operator;
   - automatically forming an encryption key based on said user-defined character string;
   - encrypting said document file to produce an encrypted document file, using said encryption key;
   - forming a transmission file, including the encrypted document and unencrypted information relating to the document file;
   - transmitting said transmission file towards a receiving station;
at said receiving station:
   - storing the received transmission file;
   - inputting the same user-defined character string by an operator;
   - automatically forming a decryption key based on said user-defined character string;
   - decrypting said encrypted document file to a decrypted document file, using said decryption key.

### BACKGROUND OF THE INVENTION

Nowadays, the generating and printing of documents must comply with various different levels of security. Furthermore, various printing organizations/configurations exist that may introduce distances both in time and in space between the generating of the document and the printing proper thereof. Such distances may have various aspects, such as: generating a document at home and using Internet for transferring to/printing at the Office; composing a document and putting it in a printing queue that resides in a Mailbox of a shared printer, like, e.g. the Océ 3165 ^{™}, such as through storing on a hard disk that is located therein; letting the electronic version of a printed document after actual printing thereof remain stored for a certain interval of time, such as twenty-four hours, in an intermediate storage facility that is more or less freely accessible, and various others.

The inventor has recognized a need for enhanced security, so that unauthorized access to classified and other restricted print-ready information should be minimized, whilst remaining user friendly as much as possible. Also, other transmissions of data, in particular document-related data such as scan files generated by scanning a document and document files for storage in a database, must be secure in order to prevent eavesdroppers from getting access to the contents of certain secret or confidential documents.

In particular, EP A1 0 929 023 discloses a Secure Printing approach wherein the document is encrypted with a session key and according to a bulk encryption algorithm, and furthermore the session key is encrypted with the intended recipient's public key (PUK). The complete print job is then transmitted to a document store. The recipient will use a so-called smart card containing his private key (PRK) for authentifying to the printer; the latter takes the identity from the card to search for documents intended for the recipient; these are then sent from the document store to the secure printer which first decrypts the session key using the recipient's PRK and then uses the decrypted session key to decrypt and print the document.

This known method, although offering a certain degree of security, still is vulnerable to dedicated code-breaking techniques. The transmitted encrypted document file still includes information that can be used to decrypt it. In particular, the encrypted session key may be extracted from the transmitted file and, since it is relatively short, may be decrypted by a massive trial-and-error attack.

Moreover, it is less flexible on the basis of an individual document. For example, the recipient must have a smart card which requires physical transport thereof, but on the other hand, the recipient will then be able to view all documents intended for the assumed holder of the card. The reference does not provide for individual access to just one document. Furthermore, before transmitting of the document, the sender must know the intended recipient's identity, which is not always feasible.

Further, WO 02/41133 discloses a printing system including a print job source, such as a user PC including a print driver, a spooling server and a printer having a polling device. Print jobs are encrypted at the print job source, using an encryption key based on user-specified data, and transferred to the spooling server. In the spooling server the print job is decrypted and stored. The polling device in the printer may then poll the spooling server for any jobs intended for the printer. If there is such a print job at the spooling server, the latter re-encrypts the print job with same key and sends the job to the printer polling device, where a user must input the same user- specified data. Based on those, the polling device forms a key, decrypts the print job and forwards it to the printer.

According to this disclosure, the print job is completely encrypted, and therefore becomes an unrecognizable block of data. It can therefore only be handled by a system that knows what it is beforehand, such as in point-to-point transfers, or decrypts it to get more information. Yet, intermediate decryptions decrease the job security and should therefore be avoided.

Likewise, US 2002/0078351 A1 discloses a system in which a file is encrypted for a point-to-point transfer, using a key that is entered both at the sending site and at the receiving site. The file itself can no longer be recognized once it is encrypted.

The latter problem is partly solved in a method disclosed in US2002/0184494 A1, wherein an encrypted file is supplied with an identifier for an intended destination device, as well as a flag, or encryption key or code, that will be recognized only by the destination device. Upon receipt of the encrypted file, the destination device evaluates the encryption key or code and, based thereupon, executes the appropriate decryption algorithm. A remaining problem with this solution is, that the encrypted file can only be recognized by the destination device, such that it cannot be handled by servers or routers.

Further, EP 1 045 574 A1, considered the closest prior art, discloses secure fax transmission, wherein a document to be transmitted is scanned and encrypted using a code entered by the user. Then, the encrypted file is transmitted according to a standard fax protocol with an unencrypted header specifying at least an intended recipient. Upon receipt at the destination station, the fax may be printed or at least inspected on a computer screen, such that the header can be read. Based on the information in the header, the fax can be handed to the recipient, who knows the decryption code. The header information is, however, only usable for human operators.

### SUMMARY OF THE INVENTION

In consequence, amongst other things, it is an object of the present invention to improve the security level of the scheme recited in the preamble. Moreover, the invention should provide a well balanced approach that trades off between smooth access and document managing functions on the one hand versus a high security level on the other hand.

Therefore, according to one of its aspects, the invention is characterized by further comprising:
at the sending station:
   - forming an additional file containing metadata relevant for the document file but not including any decryption clue, the additional file having a first part and a second part;
   - encrypting only one of said first and second parts of the additional file, using said encryption key; and
   - in the step of forming a transmission file, also including the additional file in the transmission file.

Consequently, where in the known prior art encrypted files are data blocks with very little information that is usable for the system, they are, according to the present invention, far better recognizable from the specifying unencrypted metadata, that remain intelligible and can be used for handling. Examples of such specifying items may be the name of the owner, the name of the receiver, number of copies, number of pages.

Such information may effectively be used before the actual printing, such as for accounting or for other control purposes, such as the routing in a multi-printer system, possibly routing to a repro department.

Also, it may be used in so-called interactive printing as is implemented in, e.g., the Océ 3165 ^{™}, according to which print files are never printed immediately upon reception at the printer, but rather are stored in a logical storage space in the printer memory, dedicated to the owner of the print job, and presented for selection to a local operator and subsequent printing. A user may walk up to the printer, call up a list of print jobs he has sent on the local display and select one or more thereof. Then, upon actuation of the PRINT key on the operating panel, the jobs are printed. Normally, in interactive printing, the job names are specified in the displayed list.

However, in the embodiment of the present invention, the name of the job should preferably not be in the file header in unencrypted form, as such would give an unwanted party a first useful amount of information. As an alternative therefore, the name of the job may be changed into a non-informational character string or by a date/hour-compound, either by the owner himself or by the printer driver.

In a further embodiment, the sending station splits a transmission file into two parts and first transmits only one part of a transmission file to the receiving station, and the receiving station, upon an operator selection of said transmission file, sends a request to the sending station, to transmit the remaining part of the transmission file.

For example, the splitting may be done between header information and the rest of the file, or may be done through the whole file, by taking a fixed section of each byte that must go to the receiver, such as the first half of every byte, and sending only that part of each byte but retain the rest.

The invention also relates to a method for secure transmission of files other than print files, such as scan files for storage at, e.g., the user's workstation. Further, the invention relates to a system of data processing devices, which system is adapted for secure transmission of digital data relating to a document between them.

Further advantageous aspects of the invention are recited in dependent Claims.

### BRIEF DESCRIPTION OF THE DRAWING

These and further features, aspects and advantages of the invention will be discussed more in detail hereinafter with reference to the disclosure of preferred embodiments of the invention, and in particular with reference to the appended Figures that illustrate:
Figure 1, a diagram of a network system with printers, scanners and workstations;
Figure 2, a block diagram of a procedure according to a printer embodiment of the invention;
Figure 3, a document format for use with the invention;
Figure 4, a first screen displayed at an intended printing system;
Figure 5, a second screen displayed at an intended printing system;
Figure 6, a block diagram of a procedure according to a scanner embodiment of the invention.

### DETAILED DESCRIPTION OF PREFERRED EMBODIMENTS

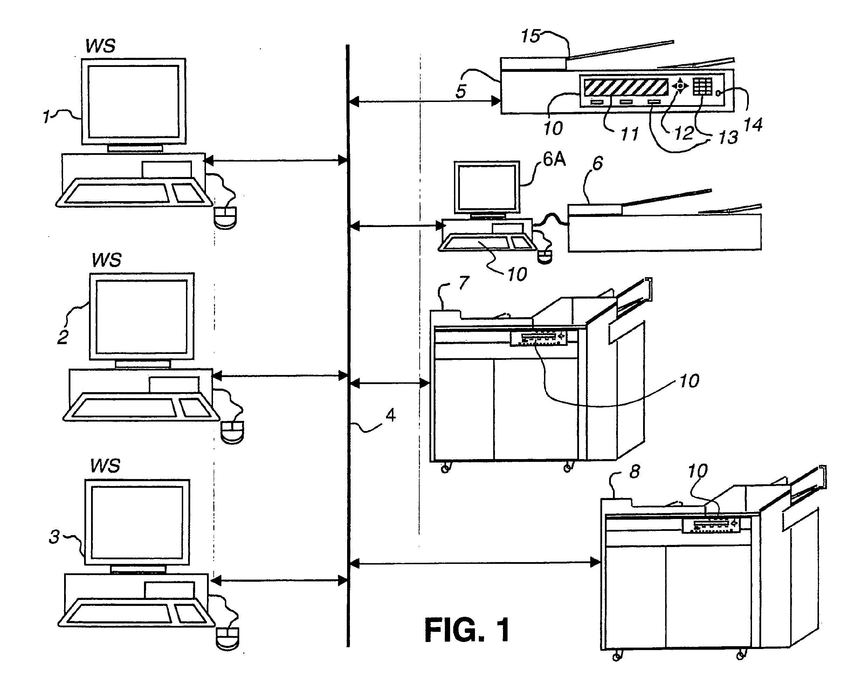

Figure 1 is a diagram of a network system with printers, scanners and workstations. The system comprises a plurality of workstations 1, 2 and 3 for users, a plurality of scanners 5, 6 and one or more printers 7, 8. The scanners and printers are provided with their own operator control unit (not shown separately), equipped with operator control means 10 such as keys 12, 13, 14 and a display 11, possibly in the form of an external operator control unit 6A, such as a PC. Where printers are in fact multifunctional digital copying machines (7, 8), the scanners of these machines may also be used as separate scanner devices. All these elements are interconnected by means of a local network 4, to which they are connected.

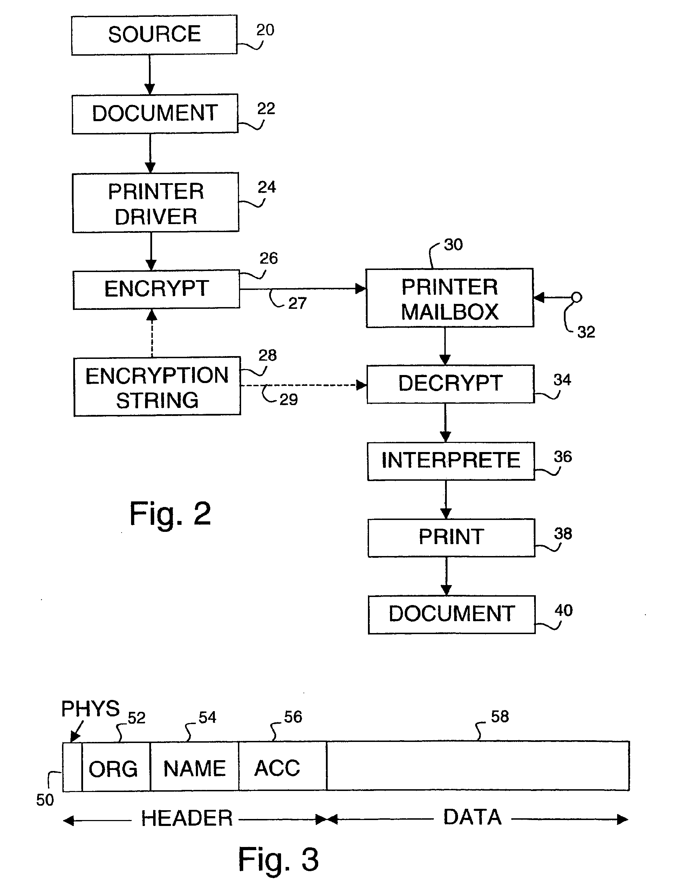

Figure 2 illustrates a block diagram of a procedure according to a printer embodiment of the present invention. Document source 20 may represent any appropriate item for sourcing, such as typewriting, drawing, visual image pickup, and other. The document 22 so generated is forwarded to the printer driver 24. The latter is generally a software module located at the document source, such as the originator's personal computer or work station (1, 2, 3). In the configuration considered, the printer driver 24 is associated with an encryption procedure 26 that uses an encryption key 28 to implement the encryption proper. Various such procedures are in wide use, such as DES, RSA, and other. The encryption key is session-specific and based on an encryption string entered by the operator in the printer driver as will be explained below.

The source, such as the user's personal computer, is generally considered sufficiently safe to store the encrypted version of the document. Note that also a non-encrypted version may reside there. The PC in question will become somewhat more vulnerable as it will have an open communication port. Another variant can have the encrypted job plus ticket on a dedicated server.

Next to the print data, that is generally encrypted completely, a document will usually contain so-called metadata, that represent some description of the document or its intended use, such being included in what is colloquially called the document header. For example, the header contains the name of the owner and of the intended user (may be the same) without encryption, but does not contain any information of the encryption string proper, neither encrypted, nor in cleartext.

Preferably, the actual encryption key used by the encryption algorithm is a function of the inputted encryption string entered by the operator. An elementary embodiment of such function is through concatenating the inputted encryption string with a standard string of characters, but more complex functions for this purpose are feasible as well. This latter feature implies that the inputting of a dummy encryption string or even omitting thereof will nevertheless ensure that no unencyphered data will be transmitted.

Now, various fields in the job-ticket or header may be encrypted as well, but certain specifying fields of the header should better remain in cleartext, such as those that specify the number of copies and pages, respectively, of the document, which fields may effectively be used before the actual printing, such as for accounting or for other control purposes, such as the routing in a multi-printer system. Such accounting functions may be effected on an intermediate server not shown in Figure 2. The abovementioned routing may comprise routing to a (possibly) external repro department. Also the owner's name would be in cleartext.

Also, the unencrypted header items may be used in so-called interactive printing as is implemented in, e.g., the Océ 3165 ^{™}, according to which print files are never printed immediately upon reception at the printer, but rather are stored in a logical storage space in the printer memory, dedicated to the owner of the print job, and presented for selection to a local operator and subsequent printing. A user may walk up to the printer, call up on the local display a list of print jobs he has sent and select one or more thereof. Then, upon actuation of the PRINT key on the operating panel, the jobs are printed.

Normally, in interactive printing, the job names are specified in the displayed list.

However, in the present invention, the name of the job should preferably not be in the file header in unencrypted form, as such would give an unwanted party a first useful amount of information. As an alternative therefore, the name of the job may be changed into a non-informational character string or by a date/hour-compound, either by the owner himself or by the printer driver.

According a first embodiment, the job is encrypted (26) with the above function of the encryption key (based on the operator-entered encryption string) and subsequently transferred to the mailbox of the printer. In the printer, the name of the intended user is extracted from the document that is loaded into the printer mailbox 30, such as for signalling in the personal mailbox (not shown specifically) of the addressee. For actual printing, the user actuates the mailbox to select the document with an appropriate control signalization 32, and inputs on a request through a forced dialogue a decryption string into decryption module 34. As shown in line item 29, the decryption string is identical to the encryption string used in the encrypting stage 26. The decryption module of the printer has information on the algorithm for forming the encryption key on the basis of the user-entered encryption string used in the printer driver and forms a decryption key accordingly.

The transfer of the decryption string may proceed in any appropriate manner, such as through carrying by the owner, or through any feasible communication outside connection 27, such as through hatched connection 29. As shown, the relation between the en/decryption string and the document is immediate, in that no physical intermediate such as a smart card is necessary, which has the advantage that print files can be shared with other persons by simply spelling the en/decryption string out to them. Neither is a temporal intermediate present such as an organizational delay between decrypting and printing other than associated to the printing operation itself.

The actual network transport of the encrypted file may be done through permutation of data blocks, such as through hashing the encryption string and possibly date and time. Furthermore, fake data blocks may be inserted into the data stream in a pseudo-random manner. The seed item for the pseudo-random generator may be based on the encryption string and/or date and time. Consequently, an eavesdropper will first have to correct the data sequence, followed by undertaking the decrypting, which greatly enhances the data security.

Immediately after decryption, the document is printed (38) and thus becomes available in hardcopy 40. If the wrong decryption string were entered, the printing procedure will only produce "garbage", if at all the file would still be printable, but the decryption string itself will still not be checked. In consequence, the whole path from the sourcing of the document until the effective printing is protected by encryption, and no long-term exposure to malevolent inspection by an unwanted party remains. In other known organizations, such exposure could in fact amount to various hours, but even several seconds could already be detrimental to security.

According to a particular embodiment, the job ticket may include an encrypted code string or "signature", encrypted by the same encryption algorithm, for faster checking if the entered decryption string is the correct one. In this way, only a small part of the file may be decrypted for on the basis thereof detecting that "garbage" is being produced, rather than decoding the bulk of the document. Of course, an appropriate diversification of the signature, such as between various destinations or customers, will improve security. The size of the signature string may lie in a range from 0.1 to 1 kilobyte, and thus considerably smaller than the print file itself.

The above finding of "unable to print" could have some other cause than the entering of a wrong decryption string, or rather could the decryption string have been unintentionally in error. However, a particular threshold number of failing print undertakings could represent an intended fraud. Therefore, when the number of "misses" exceeds a predefined threshold number, the document is automatically deleted from the printer storage. This threshold number may be adjustable, and certain ones or all of such failed printings may be logged and/or reported.

Next to advantages of the invention already discussed, the following can be listed as well. The document remains encrypted until immediately before printing. Therefore, even physically removing the printer's hard disk will not infringe security. The printing job may also be (re)routed to a different location for printing than originally intended without risk. Next to the features discussed supra, the application of so-called secure sockets may implement a further line of defence against infringers.

According to a second embodiment of the present invention, a still raised degree of security above the one considered hereabove is attained by delaying the transmission of the encrypted print data of a print job at least in part until receiving an actual printing command. Advantageously, instead thereof a minimal ticket is transmitted that only comprises the user name and some document identification. Only if the user reports at the printer and selects the job, the document data proper and the remainder of the ticket will be fetched.This will further minimize the time interval spent by the document outside the trusted environment. Also, the document will not be stored persistently at the printer when the actual printing will for some reason be foregone. A minor disadvantage of this practice is however that the transfer of the document will somewhat delay the printing after the receiving of the printing command.

A variation on the above "Just In Time" procedure is that only a fraction, such as one half, of the encrypted document is transferred before receiving the actual printing command. The rest will then remain encrypted at the source facility. The way of choosing is such that the portion of the document so transferred does not present useful information to the imposter. The inventor considers a very useful algorithm for selecting is to take a fixed section of each byte that must go to the receiver, such as the first half of every byte, and sending only that part of each byte but retain the rest. Even in possession of the encryption string, the document part located on the printer cannot be decyphered. This feature will lessen the transfer time when requesting to print, versus holding back the full document, by a factor of about 2. It is possible to hold back other fractions of the encoded document, each such choice causing a specific trade-off. The splitting may be done under control of an additional parameter that renders the split of each particular byte (or other information entity) seemingly unpredictable. In practice, an algorithm associated to the encryption string may produce a bit string, of which the one's would control the transfer, whereas the zero's would control holding back of a bit or fractional byte. An incidental advantage of the holding back is the lesser storage requirement at the printer.

A still further variation on sending the minimum ticket is to only signal the presence of a secure document at the source. In this case, each document will next to a encryption string need an identifier code. Upon requesting a print operation, first the identifier must be presented at the printer. Absence of the document at the source is logged to further protect the document name, at a price of requiring extra interaction between printer and source.

Figure 3 illustrates a document format for use with the invention, effectively shown as a bit string. The document starts with a header at left. First part 50 relates to low-level organization, such as to categorize a document with encryption, the document size, etcetera. Block 52 specifies organizational aspects of the document, such as the owner and/or the intended receiver. As discussed supra, this information is preferably not encrypted. Block 54 recites the name or other identification of the document and further such information, which as discussed supra preferably has been encrypted. Block 56 recites accounting and control information that preferably is not encrypted, inasmuch as they may serve a purpose independent from the printing proper. Finally, block 58 includes the encrypted data of the document proper.

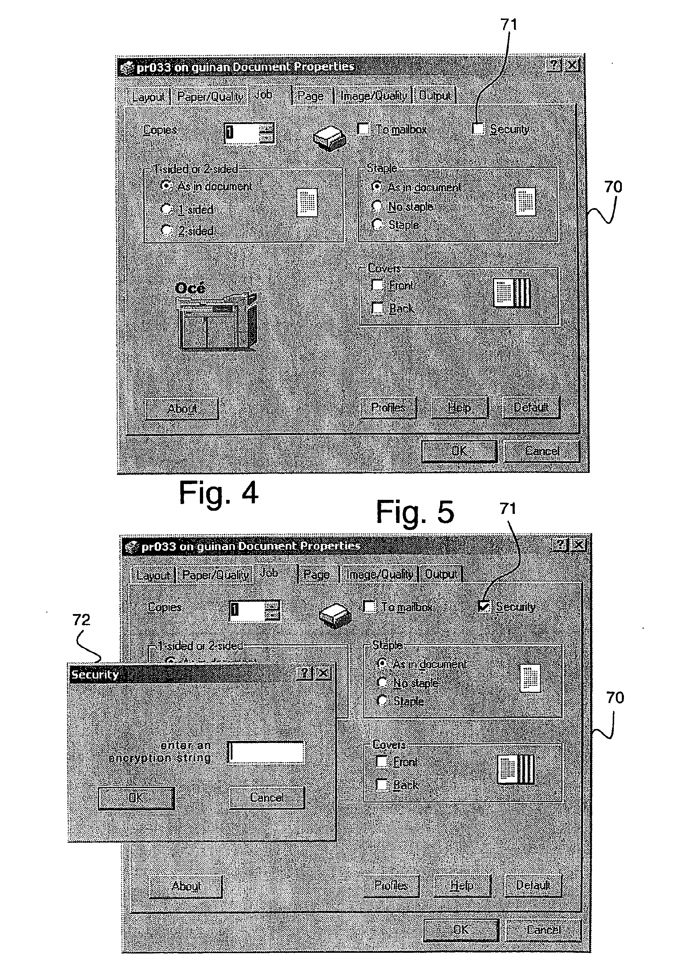

Figures 4 and 5 relate to the encrypting procedure. Figure 4 illustrates a first printer driver window 70 displayed at the user's workstation display screen, most elements of the screen being standard in a WINDOWS ® environment. In particular, a security field 71 has been indicated. If no security according to the invention is required, the user may select printing parameters and click "OK". If security is required, the user must tick the security field 71, and the display will change to Figure 5. This illustrates a second window 72 displayed at the user's workstation display screen, after ticking the security field 71 in Figure 4. This will prompt the user to fill in the encryption string field and give local "OK" at left.

As furthermore shown in Figures 4 and 5, various printing parameters may be selected, such as choosing between single-sided and double-sided, stapling or not, putting covers on the document, and selecting image quality, number of copies, and various other parameters. Now, it has been found for adherence to a house style, economy, and various other reasons, to control by centralized measures the printing functionality of printer drivers on the level of individual users. In the context of the present invention, envisioned enforcement would include forced security and, e.g., minimum encryption string length, but examples of other uses would be: forced duplex, forced mailbox, forced usage of certain fonts of character size (larger size allowed for visually handicapped persons), disable printer driver altogether, disallowance of printing to file, explicit file location for printing to file, such as to a hot directory, etcetera. Various users can have a broader range of functionalities and/or facilities.

A particularly advantageous embodiment is to give the IT manager a central database which stores various aspects that specify the printer driver for a respective user. This may be implemented as a rule-based system which greatly reduces the interaction complexity for the IT manager. Now, the printer driver will for every print job submission or periodically, such as every morning, connect to the database to check its current configuration. As the driver pops up, it will adapt its User Interface and User Functionality according to current specification. If the server cannot be reached, either the actual settings of the printer driver will be used as a default, or alternatively, printing will be blocked for the time being. The advantage of this embodiment is that permissions may be changed real-time, even such as according to fixed hour/day time-schedules or upon instantaneous emergencies. The above database may be centralized, or alternatively be replicated on every printer or printer location.

The latter version can also involve the printer proper, in that the latter will check the actual job ticket for conformance to the permissions defined in the database. This will enforce a policy of the IT manager. In particular, when the security option is enforced, the printer may automatically delete any print file that is not encrypted.

When the encrypted print file is selected for printing at the printer location, the operator is requested, through a forced dialogue, to enter the decryption string (which is identical to the encryption string) at the operating panel. Next, the printer applies the decryption algorithm to the file, using the entered string, and if the latter is correct, the decrypted file is usable and the printer can print it. If, however, the entered string is not correct, the file will not be printable and the printer will indicate so on the local display. The user may then cancel and retry locally, or cancel printing completely.

The whole printing operation according to the second embodiment, starting from the source or workstation location, is now summarized as follows:
- User wants to print a document (document content presumed ready)
- Printer driver asks for encryption string for therewith encrypting the document
- Driver encrypts document and stores it on the local workstation disk
- To indicate that a secure user job is waiting at workstation in question, the printer driver sends a minimum ticket to the selected printer; if applicable, also part of the encrypted document
- User reports at printer device, authenticates, and gets a list of his jobs
- User selects the secure job; only the device as identified by its IP address that has received the minimum ticket may fetch the remainder of the job data
- Printer disactivates "Operating System Swapping", and will from now on be active in (volatile) memory only; this prevents a non-encrypted version of the document or a key from appearing in a swapfile on the disk
- Printer fetches the remainder of the job data
- Printer requests user to enter a decryption string
- Printer decrypts document in its memory and prints document ready for use
- Printer deletes document from memory and reactivates "Operating System Swapping".

In another embodiment, the user-defined character string used for forming the encryption string is not as such entered by the user, but automatically derived from a biometric characteristic, such as a retina scan or a fingerprint scan, taken from the user. Both the user workstation and the printer include a device for measuring the biometric characteristic, such as a fingerprint scanner (not shown in the drawing), which measures and analyses the biometric data and derives a data string therefrom. The latter is then used for forming the encryption key.

The requirement that the user enter the character string is replaced by a requirement to have the relevant biometric characteristic scanned, such as to put his finger on a fingerprint scanner. Alternatively, the user workstation may store the biometric characteristic of the user (or the character string based on it) in a secure place in advance and use it for the encryption.

This embodiment has the advantage, that the user is not required to memorize a character string.

The secure procedure described above can also advantageously be employed in other document-related file transfers, such as for scanning. Generally, scanning is performed in a networked system such as shown in figure 1 by a scanner device 5, 6 or scanner module of a multi-functional device 7, 8, and scan data are then transmitted to an intended user workstation 1, 2, 3 via the network 4. The scan data may also first be stored in encrypted form at a local data storage associated to the scanner or to a server and then be fetched by a user workstation.

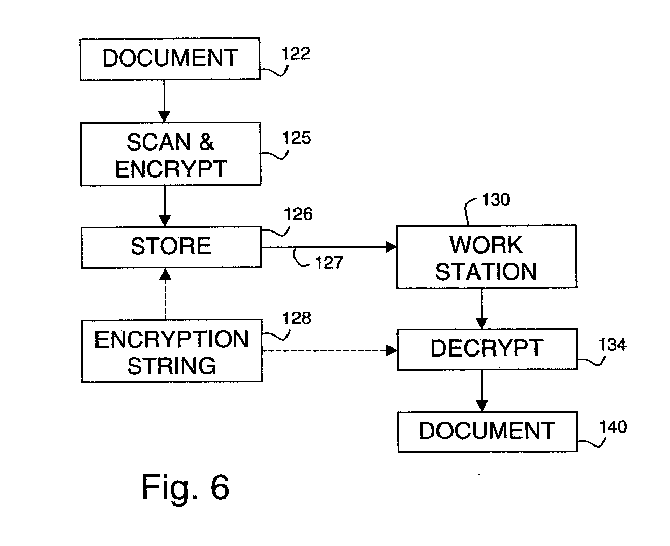

Figure 6 illustrates a block diagram of a procedure according to a scanner embodiment of the invention. A physical document 122 is positioned on the scanner platen, or in a document feeder associated thereto, and at the same time an encryption string 128 is entered in the scanner user interface. Then, in block 125, the scanner scans the document and immediately encrypts the document file generated by the scan process, using an encryption key based on the encryption string 128 in the same way as decribed for the printer driver above. The encrypted document file is stored (126) in the scanner and transmitted (130) to a designated destination, such as the operator's workstation.

Then, the intended recipient may enter the encryption string 128 into the user interface of the decryption module 134 in the workstation, and in reaction, the encrypted document file is decrypted (134) into a ready-for-use document file 140.

In a first embodiment of the above scanner application, the encrypted scan file is automatically transmitted by the scanner to the destination workstation, that has been specified by the scanner operator at the initialization of the scan job. A prerequisite is, in this embodiment, that the workstation should be operative and waiting for the scan file to arrive. An advantage is, that the encrypted document file is in the "public" domain for a short time only, because it is transmitted immediately after it has been generated.

In a second embodiment of the scanner application, the encrypted scan file is stored on the scanner disk and waits there until it is fetched by the workstation. Web applications for connecting a workstation to a scan server, selecting a file in the scan server storage and transferring a selected file through a secure connection to the destination workstation are widely known. The transferred scan file may then be decrypted in the above-described way.

Now, the present invention has hereabove been disclosed with reference to preferred embodiments thereof. Persons skilled in the art will recognize that numerous modifications and changes may be made thereto without exceeding the scope of the appended claims. In consequence, the embodiments should be considered as being illustrative, and no restriction should be construed from those embodiments, other than have been recited in the claims.

## Claims

1. A method of secure transmission of digital data relating to a document between any of a scanner, a printer and a host computer such as a user workstation, interconnected by a digital network, said method comprising the following steps:
at a sending station:
- generating a document file (22, 125) through a data source (20);
- inputting (28, 128) a session-specific user-defined character string by an operator;
- automatically forming (26) an encryption key based on said user-defined character string (28);
- encrypting (26, 125) said document file to produce an encrypted document file, using said encryption key;
- forming a transmission file, including the encrypted document file (58) and unencrypted information (52, 56) relating to the document file;
- transmitting said transmission file towards a receiving station;
at said receiving station:
- storing (30, 130) the received transmission file;
- inputting (32) the same user-defined character string (28, 128) by an operator;
- automatically forming (34) a decryption key based on said user-defined character string;
- decrypting (34, 134) said encrypted document file to a decrypted document file (40, 140), using said decryption key,
said method being **characterized by** further comprising:
at the sending station:
- forming an additional file containing metadata relevant for the document file but not including any decryption clue, the additional file having a first part and a second parts;
- encrypting only one of said first and second parts of the additional file, using said encryption key; and
- in the step of forming a transmission file, also including the additional file in the transmission file.

2. The method of claim 1, wherein
said unencrypted part of the transmission file contains items (56) suitable for accounting purposes.

3. The method of claim 1, wherein
said unencrypted part of the transmission file contains items (56) suitable for routing of the transmission file in a multi-printer system.

4. The method of claim 1, wherein
the sending station splits the transmission file into two parts and first transmits only one part of the transmission file to the receiving station, and wherein
the receiving station, upon an operator selection of said transmission file, sends a request to the sending station, to transmit the remaining part of the transmission file.

5. The method of claim 4, wherein the sending station splits the transmission file using a splitting algorithm that is effective on the level of an elementary data item, such as a bit.

6. The method of claim 4, wherein the sending station scrambles transmitted files, such as by block permutation.

7. The method of claim 4, wherein
the sending station checks the identity of the requesting receiving station, and only if the requesting station is authorized, transmits the requested transmission file part.

8. The method of claim 1, wherein
the receiving station performs decryption of the transmission file and any processing of the decrypted document file in volatile memory only.

9. The method of claim 1, wherein the receiving station is a printer having a local user interface for inputting, by an operator, said decryption string.

10. The method of claim 9, wherein said printer extracts the non-encrypted part of the transmission file and uses data contained therein to present the relevant document file at its local user interface to be selected by an operator for printing.

11. The method of claim 9, wherein the sending station includes a printer driver (70) with an optional setting (71) for secure print data transmission, the method further comprising overruling, from a central place in the network, any optional security setting, such that secure data transmission is forcedly selected.

12. The method of claim 9, wherein
the sending station first sends only the non-encrypted part of the transmission file to the printer,
the receiving station uses data contained in the non-encrypted part to present the relevant document file at its local user interface to be selected by an operator for further processing, and wherein
the receiving station, upon an operator selection of a document file, sends a request to the sending station, to transmit the rest of the transmission file.

13. The method of claim 1, wherein said sending station is a scanner having a local user interface and wherein it requests an operator to input an encryption string in advance of the scanning process.

14. A system including at least two image processing devices, such as a scanner (5, 6), a printer (7, 8) or a host computer such as a user workstation (1, 2, 3), and adapted for secure transmission of digital data relating to a document between them,
the system comprising:
a sending station including:
- a user interface (10, 1, 2, 3) for inputting a session-specific user-defined character string by an operator;
- a key former for automatically forming an encryption key based on said user-defined character string;
- an encryption module for encrypting a document file to produce an encrypted document file, using said encryption key;
- a file former for forming a transmission file, including the encrypted document file and unencrypted information relating to the document file;
- a transmitter for transmitting said transmission file towards a receiving station; and
a receiving station including:
- a receiver for receiving a transmission file from the sending station;
- a storage unit for storing a received transmission file;
- a user interface for inputting a user-defined character string by an operator;
- a second key former for automatically forming a decryption key based on said user-defined character string;
- a decryption module for decrypting said encrypted document file to a decrypted document file, using said decryption key;
**characterized in that**
the sending station further includes:
- a module for forming an additional file containing metadata relevant for the document file but not including any decryption clue, the additional file having a first part and a second part, and **in that**
the encrypting module also encrypts only one of said first and second parts of the additional file, using said encryption key, and
said file former includes the additional file in the transmission file.

15. The system of claim 14, wherein
the sending station includes a file splitter for splitting the transmission file into two parts and
said transmitter first transmits only one part of the transmission file to the receiving station, and wherein
the receiving station includes a requester for, upon an operator selection of a transmission file on the user interface of the receiving station, sending a request to the sending station, to transmit the remaining part of the transmission file.

16. The system of claim 14, wherein
the decryption module and any module in the receiving station intended for processing the decrypted document file work in volatile memory only.

17. The system of any of claims 14 to 16, wherein
the receiving station is a printer (7, 8).

18. The system of any of claims 14 to 16, wherein
the receiving station is a multiple-printer system.

19. The system of claim 17 or 18, wherein the sending station includes a printer driver (70) that can be programmed to leave no option than to use said secure transmission for print data to the receiving station.

20. The system of any of claims 14 to 16, wherein
the sending station is a scanner (5, 6, 7, 8).

## Patentansprüche

1. Verfahren zur sicheren Übertragung von digitalen Daten, die sich auf ein Dokument beziehen, zwischen einem Scanner, einem Drucker und/oder einem Host-Computer wie etwa einer Workstation eines Benutzers, die durch ein digitales Netzwerk verbunden sind, welches Verfahren die folgenden Schritte aufweist:
an einer sendenden Station:
- Erzeugen einer Dokumentdatei (22, 125) mit Hilfe einer Datenquelle (20),
- Eingeben (28, 128) einer sitzungsspezifischen, benutzerdefinierten Zeichenkette durch einen Bearbeiter,
- automatische Erstellung (26) eines Verschlüsselungscodes auf der Grundlage der benutzerdefinierten Zeichenkette (28),
- Verschlüsseln (26, 125) der Dokumentdatei mit Hilfe des Verschlüsselungscodes, um eine verschlüsselte Dokumentdatei zu erzeugen,
- Erstellen einer Übertragungsdatei, die die verschlüsselte Dokumentdatei (58) und unverschlüsselte Information (52, 56) enthält, die sich auf die Dokumentdatei bezieht,
- Übertragen der Übertragungsdatei zu einer empfangenden Station: an der empfangenden Station:
- Speichern (30, 130) der empfangenen Übertragungsdatei,
- Eingeben (32) derselben benutzerdefinierten Zeichenkette (28, 128) durch einen Bearbeiter,
- automatische Erstellung eines Entschlüsselungscodes auf der Grundlage dieser benutzerdefinierten Zeichenkette,
- Entschlüsseln (34, 134) der verschlüsselten Dokumentdatei in eine entschlüsselte Dokumentdatei (40, 140) unter Verwendung des Entschlüsselungscodes,
wobei das Verfahren **dadurch gekennzeichnet ist, daß** es weiterhin umfaßt:
an der sendenden Station:
- Erstellen einer zusätzlichen Datei, die für die Dokumentdatei relevante Metadaten, jedoch keinerlei Entschlüsselungshilfe enthält, wobei die zusätzliche Datei einen ersten Teil und einen zweiten Teil hat,
- Verschlüsseln nur eines der ersten und zweiten Teile der zusätzlichen Datei unter Verwendung des Verschlüsselungscodes, und
- in dem Schritt der Erstellung einer Übertragungsdatei, Einbeziehen der zusätzlichen Datei in die Übertragungsdatei.

2. Verfahren nach Anspruch 1, bei dem
der unverschlüsselte Teil der Übertragungsdatei Angaben (56) enthält, die für Abrechnungszwecke geeignet sind.

3. Verfahren nach Anspruch 1, bei dem
der unverschlüsselte Teil der Übertragungsdatei Angaben (56) enthält, die zum Routen der Übertragungsdatei in einem Mehrdruckersystem geeignet sind.

4. Verfahren nach Anspruch 1, bei dem
die sendende Station eine Übertragungsdatei in zwei Teile aufteilt und zunächst nur einen Teil der Übertragungsdatei an die empfangende Station übermittelt,
und bei dem
die empfangende Station bei Auswahl dieser Übertragungsdatei durch einen Bearbeiter eine Aufforderung zur Übertragung des verbleibenden Teils der Übertragungsdatei an die sendende Station sendet.

5. Verfahren nach Anspruch 4, bei dem die sendende Station die Übertragungsdatei mit Hilfe eines Aufteilungsalgorithmus aufteilt, der auf der Ebene eines elementaren Datenobjekts wie etwa eines Bit wirkt.

6. Verfahren nach Anspruch 4, bei dem die sendende Station die übertragenden Dateien scrambelt, etwa durch Blockpermutation.

7. Verfahren nach Anspruch 4, bei dem
die sendende Station die Identität der anfragenden empfangenden Station prüft und den verlangten Teil der Übertragungsdatei nur dann überträgt, wenn die anfordernde Station autorisiert ist.

8. Verfahren nach Anspruch 1, bei dem
die empfangene Station die Entschlüsselung der Übertragungsdatei und eine etwaige Verarbeitung der entschlüsselten Dokumentdatei nur in einem flüchtigen Speicher vornimmt.

9. Verfahren nach Anspruch 1, bei dem die empfangene Station ein Drukker ist, der eine lokale Benutzerschnittstelle zur Eingabe der Entschlüsselungskette durch einen Bearbeiter aufweist.

10. Verfahren nach Anspruch 9, bei dem der Drucker den nicht verschlüsselten Teil der Übertragungsdatei extrahiert und darin enthaltene Daten dazu nutzt, die betreffende Dokumentdatei auf seiner lokalen Benutzerschnittstelle zur Auswahl durch einen Bearbeiter für das Drucken zu präsentieren.

11. Verfahren nach Anspruch 9, bei dem die sendende Station einen Druckertreiber (70) mit einer optionalen Einstellung (71) für sichere Datenübertragung aufweist, welches Verfahren außerdem einschließt, daß etwaige wahlfreie Sicherheitseinstellungen von einer zentralen Stelle in dem Netzwerk aus übersteuert werden, so daß die sichere Datenübertragung zwangsweise ausgewählt wird.

12. Verfahren nach Anspruch 9, bei dem
die sendende Station zunächst nur den nicht verschlüsselten Teil der Übertragungsdatei an den Drucker sendet,
die empfangende Station Daten, die in dem nicht verschlüsselten Teil enthalten sind, dazu verwendet, die betreffende Dokumentdatei auf ihrer lokalen Benutzerschnittstelle zur Auswahl durch einen Bediener für die weitere Verarbeitung zu präsentieren, und bei dem
die empfangende Station bei Auswahl einer Dokumentdatei durch einen Bediener eine Anforderung zur Übertragung des Rests der Übertragungsdatei an die sendende Station sendet.

13. Verfahren nach Anspruch 1, bei dem die sendende Station ein Scanner ist, der eine lokale Benutzerschnittstelle aufweist, und bei dem sie vor dem Scanprozeß einen Bearbeiter auffordert, eine Verschlüsselungskette einzugeben.

14. System mit wenigstens zwei Bildverarbeitungseinrichtungen, etwa einem Scanner (5, 6), einem Drucker (7, 8) oder einem Host-Computer wie etwa einer Workstation (1, 2, 3) eines Benutzers, die für eine sichere Übertragung von auf ein Dokument bezogenen digitalen Daten zwischen ihnen ausgebildet sind,
welches System aufweist:
eine sendende Station mit:
- einer Benutzerschnittstelle (10, 1, 2, 3) zur Eingabe einer sitzungsspezifischen, benutzerdefinierten Zeichenkette durch einen Bearbeiter,
- einem Schlüsselgenerator zur automatischen Erstellung eines Verschlüsselungscodes auf der Grundlage der benutzerdefinierten Zeichenkette,
- einem Verschlüsselungsmodul zur Verschlüsselung einer Dokumentdatei zur Erzeugung einer verschlüsselten Dokumentdatei unter Verwendung des Verschlüsselungscodes,
- einem Dateigenerator zur Erzeugung einer Übertragungsdatei, welche die verschlüsselte Dokumentdatei und unverschlüsselte Information enthält, die sich auf die Dokumentdatei bezieht,
- einem Sender zur Übermittlung der Übertragungsdatei zu einer empfangenden Station; und
eine empfangende Station mit :
- einem Empfänger zum Empfang einer Übertragungsdatei von der sendenden Station,
- einer Speichereinheit zur Speicherung einer empfangenen Übertragungsdatei,
- einer Benutzerschnittstelle für die Angabe einer benutzerdefinierten Zeichenkette durch einen Bearbeiter,
- einem zweiten Schlüsselgenerator zur automatischen Erzeugung eines Entschlüsselungscodes auf der Grundlage der benutzerdefinierten Zeichenkette,
- einem Entschlüsselungsmodul zum Entschlüsseln der verschlüsselten Dokumentdatei in eine entschlüsselte Dokumentdatei unter Verwendung des Entschlüsselungscodes,
**dadurch gekennzeichnet, daß**
die sendende Station weiterhin aufweist:
- ein Modul zum Erstellen einer zusätzlichen Datei, die für das Dokument relevante Metadaten jedoch keinerlei Entschlüsselungshilfen enthält; welche zusätzliche Datei einen ersten Teil und einen zweiten Teil aufweist, und daß
das Verschlüsselungsmodul auch nur einen der ersten und zweiten Teile der zusätzlichen Datei unter Verwendung des Verschlüsselungscodes verschlüsselt und
der Dateigenerator die zusätzliche Datei in der Übertragungsdatei erzeugt.

15. System nach Anspruch 14, bei dem
die sendende Station einen Dateiteiler zum Aufteilen der Übertragungsdatei in zwei Teile aufweist und
der Sender zunächst nur einen Teil der Übertragungsdatei an die empfangende Station sendet, wobei
die empfangende Station eine Anfrageeinrichtung aufweist, die bei Auswahl einer Übertragungsdatei durch einen Benutzer an der Benutzerschnittstelle der empfangenen Station eine Aufforderung zum Übermitteln des verbleibenden Teils der Übertragungsdatei an die sendende Station sendet.

16. System nach Anspruch 14, bei dem
das Entschlüsselungsmodul und jegliches Modul in der empfangenen Station, das für die Verarbeitung der entschlüsselten Dokumentdatei vorgesehen ist, nur in einem flüchtigen Speicher arbeitet.

17. System nach einem der Ansprüche 14 bis 16, bei dem
die empfangende Station ein Drucker (7, 8) ist.

18. System nach einem der Ansprüche 14 bis 16, bei dem
die empfangende Station ein Mehrdruckersystem ist.

19. System nach Anspruch 17 oder 18, bei dem die sendende Station einen Druckertreiber aufweist, der dazu programmiert werden kann, keine andere Wahl zu lassen als die sichere Übertragung für die Übermittlung von Druckdaten an die empfangende Station zu wählen.

20. System nach einem der Ansprüche 14 bis 16, bei dem
die sendende Station ein Scanner (5, 6, 7, 8) ist.

## Revendications

1. Procédé de transmission sécurisée de données numériques relatives à un document entre l'un quelconque d'un numériseur, d'une imprimante et d'un ordinateur hôte, tel qu'un poste de travail d'utilisateur, interconnectés par un réseau numérique, ledit procédé comprenant les étapes suivantes :
au niveau d'un poste émetteur:
- générer un fichier de document (22, 125) par l'intermédiaire d'une source de données (20) ;
- faire entrer (28, 128) par un opérateur une chaîne de caractères définie par un utilisateur spécifique de la session ;
- former automatiquement (26) une clé de cryptage en fonction de ladite chaîne de caractères définie par l'utilisateur (28) ;
- crypter (26, 125) ledit fichier de document pour produire un fichier de document crypté, en utilisant ladite clé de cryptage;
- former un fichier de transmission, comprenant le fichier de document crypté (58) et d'information non cryptée (52, 56) relative au fichier de document ;
- transmettre ledit fichier de transmission à un poste récepteur ;
au niveau dudit poste récepteur :
- mémoriser (30, 130) le fichier de transmission reçu ;
- faire entrer (32) par un opérateur la même chaîne de caractères définie par l'utilisateur (28, 128) ;
- former automatiquement (34) une clé de décryptage en fonction de ladite chaîne de caractères définie par l'utilisateur ;
- décrypter (34, 134) ledit fichier de document crypté en un fichier de document décrypté (40, 140), en utilisant ladite clé de décryptage ;
ledit procédé étant **caractérisé en ce qu'**il comprend en outre :
au niveau du poste émetteur :
- à former un autre fichier contenant des métadonnées appropriées au fichier de document mais ne comprenant aucun indice de décryptage, cet autre fichier comportant une première partie et une seconde partie ;
- à crypter uniquement l'une desdites première et seconde parties de cet autre fichier, en utilisant ladite clé de cryptage ; et
- dans l'étape de formation d'un fichier de transmission, inclure également cet autre fichier dans le fichier de transmission.

2. Procédé selon la revendication 1, dans lequel
ladite partie non cryptée du fichier de transmission contient des éléments (56) appropriés pour la comptabilisation.

3. Procédé selon la revendication 1, dans lequel
ladite partie non cryptée du fichier de transmission contient des éléments (56) appropriés pour le routage du fichier de transmission dans un système comprenant plusieurs imprimantes.

4. Procédé selon la revendication 1, dans lequel
le poste émetteur fractionne le fichier de transmission en deux parties et transmet d'abord uniquement une partie du fichier de transmission au poste récepteur, et dans lequel
le poste récepteur, après sélection par l'opérateur dudit fichier de transmission, envoie une demande au poste émetteur pour qu'il transmette la partie restante du fichier de transmission.

5. Procédé selon la revendication 4, dans lequel le poste émetteur fractionne le fichier de transmission en utilisant un algorithme de fractionnement efficace au niveau d'un élément de donnée élémentaire, tel qu'un bit.

6. Procédé selon la revendication 4, dans lequel le poste émetteur rend les fichiers transmis indéchiffrables, tel que par permutation des blocs.

7. Procédé selon la revendication 4, dans lequel le poste émetteur vérifie l'identité du poste récepteur demandeur et transmet la partie du fichier de transmission demandée uniquement si le poste demandeur est autorisé.

8. Procédé selon la revendication 1, dans lequel
le poste récepteur effectue le décryptage du fichier de transmission et le traitement du fichier de document décrypté dans la mémoire non rémanente uniquement.

9. Procédé selon la revendication 1, dans lequel le poste récepteur est une imprimante ayant une interface utilisateur locale pour qu'un opérateur entre ladite chaîne de décryptage.

10. Procédé selon la revendication 9, dans lequel ladite imprimante extrait la partie non cryptée du fichier de transmission et utilise les données qu'elle contient pour présenter le fichier de document approprié à son interface utilisateur locale pour qu'il soit sélectionné par un opérateur en vue de l'imprimer.

11. Procédé selon la revendication 9, dans lequel le poste émetteur comprend un module de gestion (70) de l'imprimante avec un réglage facultatif (71) pour la transmission sécurisée des données d'impression, le procédé consistant en outre à annuler, depuis un emplacement central dans le réseau, tout réglage de sécurité facultatif de manière que la transmission sécurisée des données soit obligatoirement sélectionnée.

12. Procédé selon la revendication 9, dans lequel le poste émetteur envoie d'abord uniquement la partie non cryptée du fichier de transmission à l'imprimante,
le poste récepteur utilise les données contenues dans la partie non cryptée pour présenter le fichier de document approprié à son interface utilisateur locale pour qu'il soit sélectionné par un opérateur en vue d'un traitement ultérieur, et dans lequel
le poste récepteur, après que l'opérateur ait sélectionné un fichier de document, envoie une demande au poste émetteur pour qu'il transmette le reste du fichier de transmission.

13. Procédé selon la revendication 1, dans lequel ledit poste émetteur est un numériseur ayant une interface utilisateur locale et dans lequel il demande à un opérateur d'entrer une chaîne de cryptage avant le procédé de lecture optique.

14. Système comprenant au moins deux dispositifs de traitement d'image, tels qu'un numériseur (5, 6), une imprimante (7, 8) ou un ordinateur hôte, tel qu'un poste de travail d'utilisateur (1, 2, 3) et conçus pour effectuer entre ces dispositifs la transmission sécurisée des données numériques relatives à un document,
le système comprenant :
Un poste émetteur comprenant :
- une interface utilisateur (10, 1, 2, 3) permettant qu'un opérateur entre une chaîne de caractères définie par un utilisateur spécifique de la session;
- un générateur de clé permettant de former automatiquement une clé de cryptage en fonction de ladite chaîne de caractères définie par l'utilisateur ;
- un module de cryptage permettant de crypter un fichier de document pour produire un fichier de document crypté, en utilisant ladite clé de cryptage;
- un générateur de fichier permettant de former un fichier de transmission, comprenant le fichier de document crypté et des informations non cryptées relatives au fichier de document ;
- un transmetteur permettant de transmettre ledit fichier de transmission à un poste récepteur ; et
un poste récepteur comprenant :
- un récepteur permettant de recevoir un fichier de transmission du poste émetteur ;
- une unité de mémoire permettant de mémoriser un fichier de transmission reçu ;
- une interface utilisateur permettant de faire entrer par un opérateur une chaîne de caractères définie par l'utilisateur ;
- un second générateur de clé permettant de former automatiquement une clé de décryptage en fonction de ladite chaîne de caractères définie par l'utilisateur ;
- un module de décryptage permettant de décrypter ledit fichier de document crypté en un fichier de document décrypté, en utilisant ladite clé de décryptage;
**caractérisé en ce que**
le poste émetteur comprend en outre :
- un module permettant de former un autre fichier contenant des métadonnées appropriées au fichier de document mais ne comprenant aucun indice de décryptage, cet autre fichier comportant une première partie et une seconde partie, et **en ce que**
- le module de cryptage crypte également uniquement l'une desdites première et seconde parties de cet autre fichier, en utilisant ladite clé de cryptage ; et
- ledit générateur de fichier inclut cet autre fichier dans le fichier de transmission.

15. Système selon la revendication 14, dans lequel
le poste émetteur comprend un répartiteur de fichier permettant de fractionner le fichier de transmission en deux parties, et
ledit transmetteur transmet d'abord uniquement une partie du fichier de transmission au poste récepteur, et dans lequel
le poste récepteur comprend un programme demandeur permettant, après que l'opérateur ait sélectionné un fichier de transmission sur l'interface utilisateur du poste récepteur, d'envoyer une demande au poste émetteur, pour qu'il transmette la partie restante du fichier de transmission.

16. Système selon la revendication 14, dans lequel
le module de décryptage et n'importe quel module dans le poste récepteur sont conçus pour traiter le travail relatif au fichier de document décrypté dans la mémoire non rémanente uniquement.

17. Système selon l'une quelconque des revendications 14 à 16, dans lequel le poste récepteur est une imprimante (7, 8).

18. Système selon l'une quelconque des revendications 14 à 16, dans lequel le poste récepteur est un système comprenant plusieurs imprimantes.

19. Système selon la revendication 17 ou 18, dans lequel le poste émetteur comprend un module de gestion (70) de l'imprimante qui peut être programmé pour ne laisser aucun autre choix qu'utiliser ladite transmission sécurisée des données d'impression jusqu'au poste récepteur.

20. Système selon l'une quelconque des revendications 14 à 16, dans lequel le poste émetteur est un numériseur (5, 6, 7, 8).
